# EUROPÄISCHE PATENTSCHRIFT

(11) **EP 3 446 553 B1**
(45) Veröffentlichungstag und Bekanntmachung des Hinweises auf die Patenterteilung: **30.09.2020**
(21) Anmeldenummer: 17719504.7
(22) Anmeldetag: 06.04.2017
(51) Int. Cl.: H05B 47/19

(54) **LEUCHTVORRICHTUNG MIT ÜBERMITTLUNG VON BETRIEBSDATEN**
LIGHTING DEVICE COMPRISING THE TRANSMISSION OF OPERATING DATA
APPAREIL D'ÉCLAIRAGE AVEC TRANSMISSION DE DONNÉES DE FONCTIONNEMENT

(30) Priorität: 18.04.2016 DE 102016107154
(43) Veröffentlichungstag der Anmeldung: 27.02.2019
(73) Patentinhaber: OSRAM GmbH, 80807 München (DE)
(72) Erfinder: PEITZ, Christoph, 59556 Lippstadt (DE); STUTZ, Michel, 81541 München (DE); FEIL, Henry, 82008 Unterhaching (DE)
(74) Vertreter: Hofstetter, Schurack & Partner
(86) Internationale Anmeldenummer: PCT/EP2017/058200
(87) Internationale Veröffentlichungsnummer: WO 2017/182281

(56) Entgegenhaltungen:
- US-A1- 2012 074 842
- US-A1- 2013 234 607
- US-A1- 2014 340 190
- US-A1- 2015 076 993

## Beschreibung

Die vorliegende Erfindung betrifft eine Leuchtvorrichtung mit einem Leuchtmittel, einer Sendeeinrichtung, die in oder an dem Leuchtmittel angeordnet ist, zum drahtlosen Senden eines Ortungssignals an ein gegenüber der Leuchtvorrichtung externes Endgerät. Darüber hinaus betrifft die vorliegende Erfindung ein Verfahren zum Betreiben einer Leuchtvorrichtung mit einem Leuchtmittel, einer Sendeeinrichtung, die in oder an dem Leuchtmittel angeordnet ist, durch drahtloses Senden eines Ortungssignals von der Sendeeinrichtung an ein gegenüber der Leuchtvorrichtung externes Endgerät.

Die sogenannte "Beacon-Technologie" basiert auf einem Sender-Empfängersystem. Ein "Beacon" (zu Deutsch: "Leuchtfeuer" oder auch "Bake" beziehungsweise "Peilsender") ist ein kleiner, meist batteriebetriebener Sender, der ein Signal in (definierbaren) Zeitintervallen meist auf dem Bluetooth-Low-Energy-Standard aussendet. Das Funksignal jedes Beacon ist gekennzeichnet durch eine einmalige Identifikationsnummer (sogenannte UUID). Beacon können dazu verwendet werden, um Objekten und Orten eine digitale Identifikation zu verleihen. Objekte (an denen ein Beacon installiert ist) und Orte (an denen ein Beacon z.B. an einer Wand installiert ist) können auf diese Weise von Endgeräten (z.B. Smart-Devices) im Signalfeld des Beacon identifiziert werden.

Die Druckschrift US 2015/0076993 A1 beschreibt eine Leuchte, welche mithilfe von Baken Signale übertragen kann. Eine Vorrichtung der Leuchte weist eine Sensoreinheit sowie eine Kontrolleinheit für die Lichtintensität auf. Eine weitere Kontrolleinheit ist ausgelegt, eine Kommunikation mit einem Netzwerk zu verwalten sowie die Signalübertragung der Baken. Die Druckschrift US 2013/0234607 A1 offenbart eine LED-Beleuchtungssteuerungsvorrichtung basierend auf einer Kommunikation mit sichtbarem Licht. Mithilfe der Kommunikation von sichtbarem Licht soll ein Beleuchtungsmittel kontrolliert werden. Mithilfe von Sensoren werden Umweltinformationen über eine Umgebung der Beleuchtungsvorrichtung erfasst. Diese Informationen werden zu einer Kontrolleinheit der Beleuchtungsvorrichtung übertragen.

Die Druckschrift US 2014/0340190 A1 Beschreibt ein Lichtsystem, in dem jedes Leuchtmittel ein Drahtlosmodul aufweist. Dieses Drahtlosmodul beinhaltet eine Zeiterfassungseinheit, welche eine vergangene Zeitperiode erfasst, seitdem das Leuchtmittel mithilfe eines Wandschalters eingeschaltet wurde. Dieses drahtlose Kontrollsystem umfasst auch eine Spezifizierungseinheit, welche ausgebildet ist, andere elektrische Geräte zu spezifizieren, welche am selben Leistungsschalter wie das elektrische Gerät angeschlossen sind.

Die Druckschrift US 2012/0074842 A1 beschreibt ein kooperatives Beleuchtungssystem für Straßenfahrzeuge. Eine Vorrichtung innerhalb des Fahrzeugs kann an eine entsprechende Vorrichtung einer Straßenlampe eine Anfrage übermitteln. Je nachdem, ob dieser Anfrage stattgegeben wird, kann die Beleuchtungsstärke der Straßenlampe erhöht werden. Damit kann die Straßenlampe derart kontrolliert werden, sodass Mängel bezüglich der Beleuchtung des Scheinwerfers des Fahrzeugs ausgeglichen werden können.

Beacons können zur Identifikation eines Ortes beziehungsweise zur Ortung verwendet werden. Durch Platzierung eines oder mehrerer Beacons in einem Gebäudeareal entsteht somit eine Art funkbasiertes Raster, in dem sich ein Smart-Device über die BLE-Schnittstelle (Bluetooth Low Energy) sowie entsprechende Algorithmen lokalisieren kann. Die individuellen Identifikationsnummern der installierten Beacons geben einem Ort dabei eine Kennung, mit der ein Smart-Device näherungsweise die Position bestimmen kann (grundsätzliches Sende-Areal des Beacon kann bestimmt werden). Algorithmen auf dem Smart-Device können die Positionsgenauigkeit z.B. über Signalstärken verbessern. Es ist dabei notwendig, dass das Smart-Device auf Informationen in einer Datenablage (z.B. auf einem Cloud-Server) zugreifen kann (z.B. Identifikationsnummer und eine Kartierung). Kommt ein Endgerät (beispielsweise Smart-Device) in die Reichweite eines Senders, kann es die Identifikationsnummer detektieren und beispielsweise über eine Serverabfrage den Standort bestimmen. Die Ortungsalgorithmen greifen dabei unter anderem auf die empfangene Signalstärke der Beacons im Umkreis zu, insbesondere als Indikator für die Entfernung zum jeweiligen Beacon.

Die vorliegende Erfindung basiert auf der grundlegenden Erfindung, Beacons in Lichttechnik/Beleuchtungstechnik zu installieren. Dabei wird insbesondere der Vorteil genutzt, dass eine Lichtinstallation einen permanenten Energiezugang bietet, um den Beacon mit Energie zu versorgen. Daraus ergibt sich wiederum der Vorteil, dass die Batterie des Beacon nicht ausgetauscht werden muss und somit entsprechende Lebenszykluskosten beziehungsweise Prozesse eingespart werden können. Darüber hinaus können auch Parametrisierungen des Beacon mit höherem Energieverbrauch eingestellt werden, ohne dass die Lebensdauer des Beacon reduziert wird. Installationsprozesse von Beacons und Lichttechnik können zudem vereinheitlicht werden. Ein weiterer Vorteil ist eine definierte Arretierungsposition eines Beacon-Senders, der gut vor Manipulation geschützt ist. Einem Ort kann somit eine klare und sichere Kennung verliehen werden.

Einen Überblick über Nutzpotentiale von Beacons in Lichttechnik bietet folgende Aufzählung:
- Energieversorgung der Lichtinstallation anstatt einer Batterie nutzen, um die Lebenszykluskosten des Beacon zu reduzieren;
- Energieversorgung der Lichtinstallation nutzen, um die Sendeparameter an den Dienst und nicht an die verfügbare Restenergie beziehungsweise die Parameter der Batterie anzupassen (beispielsweise häufige Sendezyklen erzeugen hohe Genauigkeit der Dienste, jedoch auch höheren Energieverbrauch);
- Austausch der Batterie konventioneller Beacons birgt Risiken (z.B. im Hinblick auf Fehler in der Handhabung);
- Vermeidung einer Nicht-Verfügbarkeit der Dienste durch eine unterbrechungsfreie Energieversorgung des Beacon;
- Installationsort unterhalb der Decke ist ideal für die Signalausbreitung des Beacon;
- Installationsort unterhalb der Decke macht das Gesamtsystem robuster gegen Störungen/Abschattungen durch Objekte auf Höhe der Flurebene im Gegensatz zu einer Installation des Beacon selbst auf Höhe der Flurebene;
- Beacon wird vor Manipulation/Fremdzugriff (versehentlich, mutwillig) geschützt;
- Beleuchtung und Dienste (z.B. Ortungsdienste) werden als Gesamtsystem "aus einer Hand" angeboten (d.h. Systemlieferant ist auch Dienst-Anbieter);
- Möglichkeit zur Nutzung des sicheren Kommunikationsnetzwerks der Lichtinstallation, z.B. um den Beacon zu konfigurieren oder Beacons untereinander zu vernetzen;
- Vereinheitlichung der Installationsprozesse von Beacons und Lichtinstallation;
- Möglichkeit zur Kopplung zu weiteren Systemelementen der peripheren Gebäudeinfrastruktur über das Kommunikationsnetzwerk der Lichtinstallation, z.B. Elementen der Sicherheitstechnik;
- optisch ansprechendes System, da der Beacon nicht sichtbar in der Lichtinstallation untergebracht werden kann.

Ein Beacon kann in oder an einer elektrischen Beleuchtungsvorrichtung angeordnet sein. Der Beacon kommuniziert mit einem Endgerät (z.B. Smart-Device). Dabei ist der Beacon gegebenenfalls über eine Kommunikationsverbindung mit weiteren Beacons oder mit Infrastrukturelementen verbunden.

Innerhalb eines Areals haben Menschen und Geräte gegebenenfalls die Herausforderung, sich zu orientieren, zu navigieren und andere lokale digitale Dienste ausfindig zu machen und zu nutzen (z.B. Apps oder App-Funktionen, Google Maps, Lightify Lichtsteuerung). Die Lichtinstallation mit integriertem Beacon in einem Areal wird für diese Nutzpotentiale zu einem Ortungs- beziehungsweise Orientierungssystem. Mit der damit realisierbaren Selbstortung des Endgeräts können nun Dienste bereitgestellt werden, wie etwa Navigation oder die Bereitstellung von ortsspezifischen Informationen.

Ein Aspekt der Beacon-Technologie ist die Möglichkeit zur Konfiguration typischer Parameter wie beispielsweise Signalstärke und Sendeintervall des Beacon. Mit unterschiedlichen Konfigurationen können verschiedene Anwendungsszenarien individuell unterstützt werden. Wenn eine hohe Servicequalität (genaue Lokalisierung in kurzen Abständen) gefordert ist (z.B. bei einer Indoor-Navigation), sind z.B. sehr kurze Sendeintervalle zu konfigurieren.

Derzeit werden für die Energieversorgung der Beacons Batterien eingesetzt. Durch die Notwendigkeit, diese Batterien in regelmäßigen Zyklen zu wechseln, ergibt sich ein hoher Aufwand sowie entsprechend hohe Lebenszykluskosten für die Beacons.

Eine hohe Service-Qualität - beispielsweise hohe Ortungsgenauigkeit, hohe Reichweite, hohes Sendeintervall - benötigt vergleichsweise viel Energie beim Sender-Modul, sodass die Batterie eines batteriebetriebenen Beacons nach kurzer Zeit (z.B. nach einem Monat) ausgetauscht werden muss. Jeder Austausch einer Batterie birgt neben dem Nachteil der Austauschkosten zudem das Risiko, dass die Funktionalität des Ortungssystems durch kleine Positionsveränderung oder falsche Handhabung der Beacons nachteilig beeinflusst wird. Gegebenenfalls besteht die Gefahr, dass der Betreiber (z.B. Besitzer eines Supermarkts) sich des Energiemangels der Beacons nicht bewusst ist beziehungsweise die Beacons nicht wiederfindet, wenn keine ausreichende Restenergie mehr vorhanden ist. Die Dienste (z.B. Navigation) der Beacons sollten dem Nutzer jedoch permanent zur Verfügung stehen. Dies erfordert eine unterbrechungsfreie Energieversorgung.

Die Anbringung/Installation der Beacons an/in oder als Teil einer Lichtinstallation/Leuchte beziehungsweise eines Leuchtmittels (im Folgenden zusammengefasst kurz: Leuchtmittel) würde es gegenüber einem batteriebetriebenen Beacon ermöglichen, die Energieversorgung der Leuchtvorrichtung für die Energieversorgung des Beacon zu nutzen und somit die Batterie des Beacon zu substituieren und den damit verbundenen Problemstellungen (vergleiche oben) entgegenzuwirken.

Grundsätzlich besteht die spezifische Problematik, dass ein Betreiber und/oder Dienstleister in einigen Installationsbereichen von Lichtinstallationen bzw. Leuchtmitteln (anders: Servicebereiche) keine oder nur unzureichende Informationen/Rückmeldungen über den Betrieb der installierten Lichtinstallationen bzw. Leuchtmittel erhält. Beispiele hierfür können sein, wenn die Lichtinstallationen bzw. Leuchtmittel nicht über ein sogenanntes Licht-Management-System angesteuert werden oder wenn eine Steuerung ausschließlich über Präsenz-Melder erfolgt (z. B. in einer Tiefgarage) oder wenn ein Licht-Management-System eingesetzt wird, das keine/nur wenige Informationen von seinen angeschlossenen Lichtinstallationen/Leuchten bzw. Leuchtmitteln erhält.

Aufgrund der fehlenden oder unzureichenden Informationen bzw. Betriebsdaten ist es etwa nicht möglich, typische Schaltzyklen der Anwendung zu ermitteln, z. B. um Hinweise auf Energieeinsparpotenziale geben zu können. Ebenso kann es nicht möglich sein, Betriebsdaten der Anwendungen zu ermitteln, z. B. im Hinblick auf einen notwendigen Austausch von Leuchtmitteln (Betriebsstundenzähler).

Die Aufgabe der vorliegenden Erfindung besteht somit darin, den Betrieb von Leuchtvorrichtungen komfortabler überwachen zu können.

Erfindungsgemäß wird diese Aufgabe gelöst durch eine Leuchtvorrichtung nach Anspruch 1 sowie ein Verfahren nach Anspruch 10. Vorteilhafte Weiterbildungen der Erfindung ergeben sich aus den Unteransprüchen.

Entsprechend der vorliegenden Erfindung wird demnach eine Leuchtvorrichtung mit einem Leuchtmittel und einer Sendeeinrichtung bereitgestellt. Die Sendeeinrichtung ist in oder an dem Leuchtmittel angeordnet und dient zum drahtlosen Senden eines Ortungssignals (gegebenenfalls mit spezifischen Orts-, Orientierungs- und/oder Ortungsdaten) an ein gegenüber der Leuchtvorrichtung externes Endgerät. So kann beispielsweise die Leuchtvorrichtung ein Gehäuse aufweisen, in dem das Leuchtmittel angeordnet ist und in oder an dem sich die Sendeeinrichtung befindet. Die Sendeeinrichtung dient primär dazu, ein Ortungssignal an ein externes (mobiles) Endgerät zu senden. Bei diesem Ortungssignal kann es sich beispielsweise um ein festes vorgegebenes Signal handeln und das Endgerät erfasst die Empfangsstärke, um sich an dem Leuchtmittel zu orientieren. In einer anderen Variante kann das Ortungssignal Ortungsdaten aufweisen, die geographisch den Standort des Leuchtmittels repräsentieren, so dass das Endgerät darüber seinen eigenen Standort abschätzen kann. Gemäß einer noch anderen Variante beinhaltet das Ortungssignal beispielsweise Identifikationsdaten des Leuchtmittels, so dass das Endgerät genau dasjenige Leuchtmittel identifizieren kann, in dessen Nähe es sich befindet. Mit dieser Information und entsprechendem Kartenmaterial kann sich das Endgerät dann orten.

Die erfindungsgemäße Leuchtvorrichtung besitzt darüber hinaus eine Datenverarbeitungseinrichtung, die in oder an dem Leuchtmittel angeordnet ist, zum Gewinnen von Leuchtmitteldaten über das Leuchtmittel und zum Bereitstellen dieser Daten für die Sendeeinrichtung. Bei diesen Leuchtmitteldaten handelt es sich beispielsweise um Schaltzeiten, zu denen das Leuchtmittel ein- bzw. ausgeschaltet wurde, oder um Betriebsstunden. Darüber hinaus kann es sich bei den Leuchtmitteldaten aber auch um Betriebsbereitschaftssignale oder andere das Leuchtmittel betreffende Daten handeln. Die gewonnen Leuchtmitteldaten werden dann von der Datenverarbeitungseinrichtung zum Senden durch die Sendeeinrichtung an das externe Endgerät bereitgestellt. Damit wird die Leuchtvorrichtung nicht nur zum Senden von Ortungsdaten bzw. Ortungssignalen verwendet, sondern auch zum Senden von Leuchtmitteldaten bzw. Betriebsdaten des Leuchtmittels, um dieses besser überwachen zu können.

Das Leuchtmittel und die Sendeeinrichtung besitzen eine Energieversorgungseinrichtung zur gemeinsamen, insbesondere parallelen Energieversorgung. Damit benötigt die Sendeeinrichtung nicht eine eigene Energieversorgung. Vielmehr kann sie beispielsweise von einem Vorschaltgerät der Leuchtvorrichtung, das das Leuchtmittel versorgt, ebenfalls mit Energie versorgt werden. Dabei wird die Sendeeinrichtung vorzugsweise parallel zu dem Leuchtmittel mit Energie versorgt. So können beispielsweise ein LED-Modul und eine Sendeeinrichtung parallelgeschaltete Versorgungseingänge besitzen.

Darüber hinaus weist die Energieversorgungseinrichtung einen Energie-Zwischenspeicher ausschließlich zur Versorgung der

Sendeeinrichtung auf. So kann beispielsweise eine Batterie oder ein Akku vorgesehen sein, die/der die Sendeeinrichtung auch dann mit Energie versorgt, wenn das Leuchtmittel nicht mit Energie versorgt wird und beispielsweise ausgeschaltet ist. Auf diese Weise kann sichergestellt werden, dass die Sendeeinrichtung das Ortungssignal und gegebenenfalls die Leuchtmitteldaten unabhängig vom Betrieb des Leuchtmittels senden kann.

In einer speziellen Ausgestaltung kann vorgesehen sein, dass die Sendeeinrichtung als Bake bzw. Beacon ausgebildet ist. Bei einer solchen Bake handelt es sich um ein Standardgerät, mit dem ortsspezifische Informationen vorzugsweise zum Orten oder orientieren abgesendet werden können. Diese Bake kann dann ebenso zum Absenden der Leuchtmitteldaten eingesetzt werden.

In einer Weiterbildung ist die Sendeeinrichtung als drahtlose Kommunikationseinrichtung ausgebildet, mit der auch Daten für die Datenverarbeitungseinrichtung empfangen werden können. Dies bedeutet, dass die Sendeeinrichtung nicht nur Sendefunktionalität sondern auch Empfangsfunktionalität besitzt und somit zur bidirektionalen Kommunikation geeignet ist. Auf diese Weise können beispielsweise Konfigurationsdaten für das Leuchtmittel oder die Sendeeinrichtung in die Leuchtvorrichtung (drahtlos) eingespielt werden.

Die Erfindung sieht vor, dass die Leuchtvorrichtung eine Energieerfassungseinrichtung zum Erfassen einer Energieversorgung der Sendeeinrichtung besitzt, wobei die Leuchtmitteldaten eine Information von der Energieerfassungseinrichtung darüber enthalten, ob die Sendeeinrichtung zu einem vorgegebenen Zeitpunkt von dem Energie-Zwischenspeicher mit Energie versorgt wird oder nicht. Eine solche Information, ob die Sendeeinrichtung von einer Versorgungseinrichtung des Leuchtmittels oder von dem Energie-Zwischenspeicher (z. B. Batterie) mit Energie versorgt wird, gibt Aufschluss darüber, ob die Energieversorgung korrekt funktioniert, wenn beispielsweise bekannt ist, dass das Leuchtmittel leuchtet. In diesem Fall müsste nämlich das Leuchtmittel bzw. dessen Versorgung auch die Sendeeinrichtung versorgen und nicht etwa der Energie-Zwischenspeicher.

Gegebenenfalls weist die Leuchtvorrichtung auch eine Ladezustandserfassungseinrichtung zum Erfassen eines Ladezustands des Energie-Zwischenspeichers auf, wobei die Leuchtmitteldaten eine Information von der Ladezustandserfassungseinrichtung über einen aktuellen Ladezustand des Energie-Zwischenspeichers enthalten. Eine solche Information über den Ladezustand ist beispielsweise dann von Bedeutung, wenn über die Betriebsfähigkeit bzw. die Restlebensdauer eines Energie-Zwischenspeichers entschieden werden muss. Auch kann der Ladezustand dahingehend Informationen bieten, wie lange die Sendeeinrichtung noch betrieben werden kann, ohne dass das Leuchtmittel eingeschaltet werden muss.

Des Weiteren kann die Leuchtvorrichtung über eine Fehlererfassungseinrichtung zum Erfassen eines Fehlers betreffend das Leuchtmittel verfügen, wobei die Leuchtmitteldaten einen Fehlercode der Fehlererfassungseinrichtung enthalten. Eine derartige Fehlererfassungseinrichtung stellt ein komfortables Diagnosetool dar, mit dem zielgerichtet ein Fehler erkannt werden kann. Insbesondere kann so die Art eines Fehlers rascher erfasst werden, ohne dass aufwendige Datenübertragungen notwendig wären.

Entsprechend einer anderen Ausführungsvariante besitzt die Leuchtvorrichtung eine Sensoreinrichtung zum Erfassen einer Größe aus einer Umgebung oder von der Leuchtvorrichtung, wobei die Leuchtmitteldaten entsprechende Umgebungsdaten der Sensoreinrichtung enthalten. Die Umgebungsdaten können also beispielsweise eine Temperatur in der Umgebung des Leuchtmittels oder eine Temperatur von dem Leuchtmittel umfassen. Darüber hinaus kann sich die erfasste Größe aber auch beispielsweise auf eine Luftfeuchtigkeit, einen Luftdruck, einen Stromverbrauch, eine elektrische Spannung oder dergleichen beziehen.

Zusammen mit mindestens einer wie oben geschilderten Leuchtvorrichtung und dem Endgerät kann ein Beleuchtungssystem gebildet werden, wobei das Endgerät eine separate Kommunikationsschnittstelle zu einer von der Leuchtvorrichtung verschiedenen Datenverarbeitungsvorrichtung aufweisen kann. Damit können beispielsweise Betriebsdaten des Leuchtmittels über das Endgerät an eine zentrale Datenerfassungseinrichtung z. B. im Internet oder auf einem separaten Server hinterlegt werden.

Gemäß einer weiteren Ausführungsform ist das Beleuchtungssystem mit mehreren derartigen Leuchtvorrichtungen ausgestattet, wobei die Sendeeinrichtung jeder Leuchtvorrichtung als Kommunikationseinrichtung mit Sende- und Empfangsfunktion ausgebildet ist, und zwischen den Kommunikationseinrichtungen der Leuchtvorrichtungen ein vermaschtes Netz aufgebaut ist. Die Leuchtmitteldaten bzw. Betriebsdaten der Leuchtmittel können so untereinander ausgetauscht und an geeigneten Punkten des Netzes weiterverarbeitet werden.

Die obige Aufgabe wird erfindungsgemäß auch gelöst durch ein Verfahren zum Betreiben einer Leuchtvorrichtung mit einem Leuchtmittel, einer Sendeeinrichtung, die in oder an dem Leuchtmittel angeordnet ist, durch drahtloses Senden eines Ortungssignals von der Sendeeinrichtung an ein gegenüber der Leuchtvorrichtung externes Endgerät. Anschließend erfolgt ein Gewinnen von Leuchtmitteldaten über das Leuchtmittel und ein Senden der Leuchtmitteldaten neben den Ortungsdaten von der Sendeeinrichtung an das externe Endgerät. Die oben geschilderten funktionellen Merkmale der erfindungsgemäßen Leuchtvorrichtung bzw. des erfindungsgemäßen Beleuchtungssystems können auch zur Weiterbildung des erfindungsgemäßen Verfahrens herangezogen werden. Sie sind dabei als entsprechende Verfahrensmerkmale zu verstehen.

Die vorliegende Erfindung wird nun anhand der beigefügten Zeichnungen näher erläutert, in denen zeigen:
- Fig. 1: ein schematisches Diagramm zum Aufbau einer Leuchtvorrichtung mit Sende-Empfangs-Einrichtung und Peripheriegeräten;
- Fig. 2: ein schematisches Diagramm zum Aufbau einer alternativen Ausführungsform mit einem Datenspeicher der Sende-Empfangs-Einrichtung; und
- Fig. 3: ein schematisches Diagramm zum Aufbau einer weiteren Ausführungsform mit mehreren Leuchtvorrichtungen und vernetzten Sende-Empfangs-Einrichtungen.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Merkmalskombinationen, sondern auch in Alleinstellung oder in anderen technisch sinnvollen Merkmalskombinationen realisiert werden können.

Eine beispielhafte Leuchtvorrichtung kann in einem Gebäude, einer Anlage oder aber auch beispielsweise in einem Schiff installiert sein, wo es notwendig ist, neben der Beleuchtung auch eine jeweils ortsspezifische Information bereitzustellen. Eine solche Leuchtvorrichtung besitzt eine Sende- bzw. Kommunikationseinrichtung (z. B. Beacon) in/an oder als Teil einer Lichtinstallation/Leuchte bzw. eines Leuchtmittels (nachfolgend als Leuchtmittel zusammengefasst). Die Kommunikations- bzw. Sendeeinrichtung wird vorzugsweise über das Leuchtmittel bzw. dessen Stromversorgungseinrichtung

(z. B. elektronisches Vorschaltgerät) mit Energie versorgt. Eine Möglichkeit, bei der kein aufwendiger Energiewandler benötigt wird, ist der elektrische Anschluss der Kommunikationseinrichtung parallel zu dem Leuchtmittel, nämlich beispielsweise einer LED-Einheit bzw. einer Gruppe von LEDs oder unter Umständen einem LED-Trägermodul.

Darüber hinaus ist es von Vorteil, wenn die Leuchtvorrichtung einen Energie-Zwischenspeicher (z. B. Akku, Kondensator) aufweist. Dieser stellt der Sende- bzw. Kommunikationseinrichtung, z. B. Beacon/Bake, die notwendige Energie im Betrieb zur Verfügung, wenn die Energieversorgung durch das Leuchtmittel unterbrochen ist (z. B. im Falle dass die Leuchte ausgeschaltet ist und kein Licht emittiert).

Wie eingangs erwähnt wurde, besteht gerade in größeren System mit mehreren Leuchtvorrichtungen die Problematik, den Betriebszustand jeder Leuchtvorrichtung nicht ohne Weiteres zu kennen bzw. nicht ohne Weiteres erfahrbar machen zu können. Um dieser Problematik entgegenzuwirken, wird eine Leuchtvorrichtung bzw. ein Verfahren vorgeschlagen, welches im Rahmen einer Kommunikationsverbindung zwischen einer Sende-(Empfangs-)Einrichtung (z. B. Beacon) in/an oder als Teil einer Lichtinstallation/Leuchte bzw. eines Leuchtmittels und einem ortsfest und/oder nicht ortsfesten Endgerät über die übermittelten Kommunikationsdaten weitere Informationen betreffend die Lichtinstallation und/oder das Leuchtmittel und/oder das System überträgt. Über die gesendeten Daten (nachfolgend auch Leuchtmitteldaten genannt) der Sende-(Empfangs-)Einrichtung (nachfolgend kurz: Sendeeinrichtung) werden auf diese Weise zusätzliche weitere Informationen (z. B. Advertising-Daten eines Beacon-Moduls) übertragen, die über eine zyklisch ausgesendete Identifikation der Sendeeinrichtung hinausgehen und insbesondere die Lichtinstallation bzw. das Leuchtmittel oder das System betreffen.

Typische zu übermittelnde Informationen bzw. Leuchtmitteldaten können den Betriebszustand betreffen. In einem ersten Zustand des Beleuchtungssystems oder der Leuchtvorrichtung erfolgt eine Energieversorgung der Sendeeinrichtung über das Leuchtmittel bzw. dessen Energieversorgungseinrichtung. In einem zweiten Betriebszustand erfolgt die Energieversorgung über einen Energie-Zwischenspeicher bzw. eine Batterie. In einem Beispiel liegt an der Leuchtvorrichtung eine Eingangsspannung von 3 V an. Dies entspricht einer Versorgung über das Leuchtmittel, während eine Eingangsspannung von 2,8 V einer Versorgung auf die Batterie bzw. den Akku entspricht. Eine solche Unterscheidung erlaubt im Wesentlichen einen Rückschluss über die Betriebszustände, in denen die Lichtinstallation eingeschaltet ("Licht an") und in denen die Lichtinstallation bzw. das Leuchtmittel ausgeschaltet ("Licht aus") war.

Eine weitere typische zu übermittelnde Information kann den Ladezustand des Energie-Zwischenspeichers des Systems oder Fehlercodes der Lichtinstallation bzw. des Leuchtmittels betreffen. Gegebenenfalls sind weitere Daten zur Übertragung denkbar, die durch die Lichtinstallation/Leuchte bzw. das Leuchtmittel erfasst werden, z. B. Temperaturen innerhalb/außerhalb der Lichtinstallation/Leuchte bzw. des Leuchtmittels.

Im Folgenden werden fünf verschiedene, mögliche Ausprägungen für ein Gesamtsystem/Beleuchtungssystem mit mindestens einer Leuchtvorrichtung dargestellt. Diese Ausprägungen sind rein beispielhaft und können weiter variiert werden.

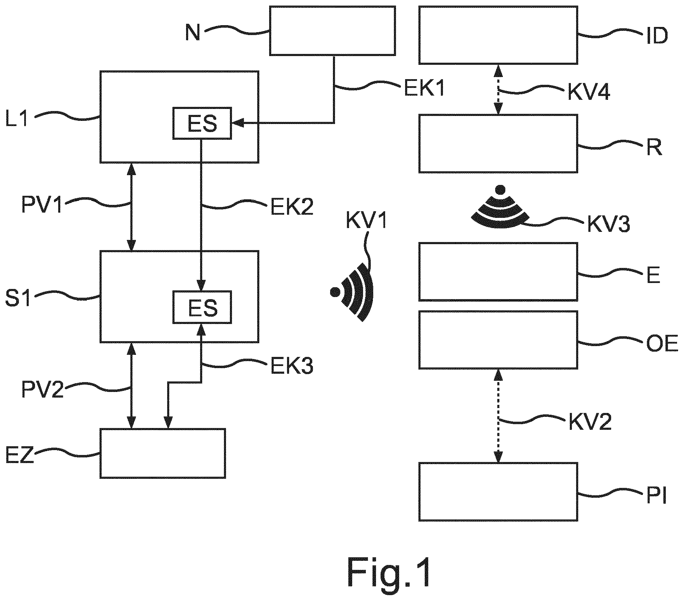

Gemäß einer ersten Variante, die in Fig. 1 dargestellt ist, steht eine Leuchte/Lichtinstallation bzw. Leuchtmittel (nachfolgend kurz Leuchtmittel) L1 mit einer Sende-(Empfangs-)Vorrichtung (nachfolgend kurz Sendeeinrichtung) S1 in physischer Verbindung PV1. Dies bedeutet, dass die Sendeeinrichtung S1 in/an der Leuchteinrichtung L1 angeordnet oder Teil von dieser ist. Das Leuchtmittel L1 besitzt hier eine integrierte Energieschnittstelle ES, welche durch ein Vorschaltgerät realisiert sein kann. Diese Energieschnittstelle ES des Leuchtmittels L1 erhält über einen Energieübertragungskanal EK1 Energie aus einem Versorgungsnetz N. Das Versorgungsnetz N kann beispielsweise eine Wechselspannung von 230 V bereitstellen.

Auch die Sendeeinrichtung S1 besitzt eine Energieschnittstelle ES. Darüber hinaus besitzt sie eine Informationsverarbeitungseinheit IV. Über einen Energieübertragungskanal EK2 erhält die Energieschnittstelle ES der Sendeeinrichtung S1 von der Energieschnittstelle ES des Leuchtmittels L1 Energie, wenn das Leuchtmittel L1 angeschaltet ist.

In dem Beispiel von Fig. 1 ist an die Sendeeinrichtung S1 zur unterbrechungsfreien Stromversorgung ein Energie-Zwischenspeicher EZ angeschlossen, der beispielsweise als Akku oder Kondensator ausgeführt sein kann. Der Energie-Zwischenspeicher EZ ist gemäß der physischen Verbindung PV2 in oder an der Sendeeinrichtung S1 angeordnet oder ist Teil von dieser. Der Energie-Zwischenspeicher EZ ist über einen bidirektionalen Energieübertragungskanal EK3 mit der Energieschnittstelle ES der Sendeeinrichtung S1 gekoppelt. Falls das Leuchtmittel L1 angeschaltet ist, kann der Energie-Zwischenspeicher EZ über die Sendeeinrichtung S1 bzw. deren Energieschnittstelle ES geladen werden. Falls jedoch das Leuchtmittel L1 ausgeschaltet ist, kann die Energieversorgung der Sendeeinrichtung S1 über den Energie-Zwischenspeicher erfolgen.

Die Sendeeinrichtung S1 überträgt mittels einer drahtlosen Kommunikationsverbindung KV1 (z. B. BLE-Verbindung) ein Ortungssignal, welches beispielsweise Ortsdaten oder Orientierungsdaten enthält, an ein mobiles Endgerät E, oder auch an mehrere solcher Endgeräte. Darüber hinaus überträgt die Sendeeinrichtung S1 über die Kommunikationsverbindung KV1 zusätzlich zu dem Ortungssignal weitere Informationen bzw. Betriebszustandsdaten betreffend das Leuchtmittel L1. Insbesondere diese weiteren Informationen bzw. Betriebszustandsdaten betreffend das Leuchtmittel L1 werden über die Kommunikationsverbindung KV1 auch an ein ortsfestes Endgerät OE drahtlos übertragen. Dieses ortsfeste bzw. ortsgebundene Endgerät OE kann über einen Energie-Zwischenspeicher und/oder über eine externe Energieversorgung versorgt werden. Das ortsfeste Endgerät OE besitzt neben der Kommunikationsschnittstelle zur drahtlosen Kommunikation über die Kommunikationsverbindung KV1 zusätzlich mindestens eine weitere drahtlose oder drahtgebundene Kommunikationsschnittstelle für eine Kommunikationsverbindung KV2 zu einer peripheren Infrastruktur PI. Bei dieser kann es sich beispielsweise um einen Diensteserver, eine Cloud usw. handeln. Zusätzlich kann das ortsfeste Endgerät OE gegebenenfalls über einen internen Datenspeicher verfügen, auf dem die gesendeten Daten (beispielsweise Betriebsinformationen des Leuchtmittels L1) gespeichert werden. Die gespeicherten Daten könnten beispielsweise über eine drahtgebundene Schnittstelle ausgelesen werden.

Des Weiteren besteht von dem mobilen Endgerät E beispielsweise eine drahtlose Kommunikationsverbindung KV3 zu einem Router R. Bei dieser drahtlosen Kommunikationsverbindung KV3 kann es sich beispielsweise um eine WiFi-Verbindung handeln. Der Router R seinerseits steht in Kommunikationsverbindung KV4 mit einer Infrastruktur für Dienste ID. Dabei kann es sich beispielsweise um das Internet oder einen zentralen Diensteserver handeln.

Während des Betriebs kann beispielsweise der Energieübertragungskanal EK3 zwischen der Sendeeinrichtung S1 und dem Energie-Zwischenspeicher EZ überwacht werden. Fließt beispielsweise in einem ersten Zustand Energie von der Energieschnittstelle ES der Sendeeinrichtung S1 in den Energie-Zwischenspeicher EZ, so erfolgt eine externe Energieversorgung durch das Leuchtmittel L1 und das Licht ist an. In einem zweiten Zustand hingegen fließt Energie von dem Energie-Zwischenspeicher EZ zu der Energieschnittstelle ES der Sendeeinrichtung S1. Dies bedeutet, dass keine externe Energieversorgung durch das Leuchtmittel L1 vorliegt und das Licht ausgeschaltet ist. Korrespondierende Leuchtmitteldaten, die die beiden Zustände repräsentieren, können von der Sendeeinrichtung S1 über die Kommunikationsverbindung KV1 zu dem mobilen Endgerät E oder des ortsfesten Endgerät OE neben dem Ortungssignal übermittelt werden.

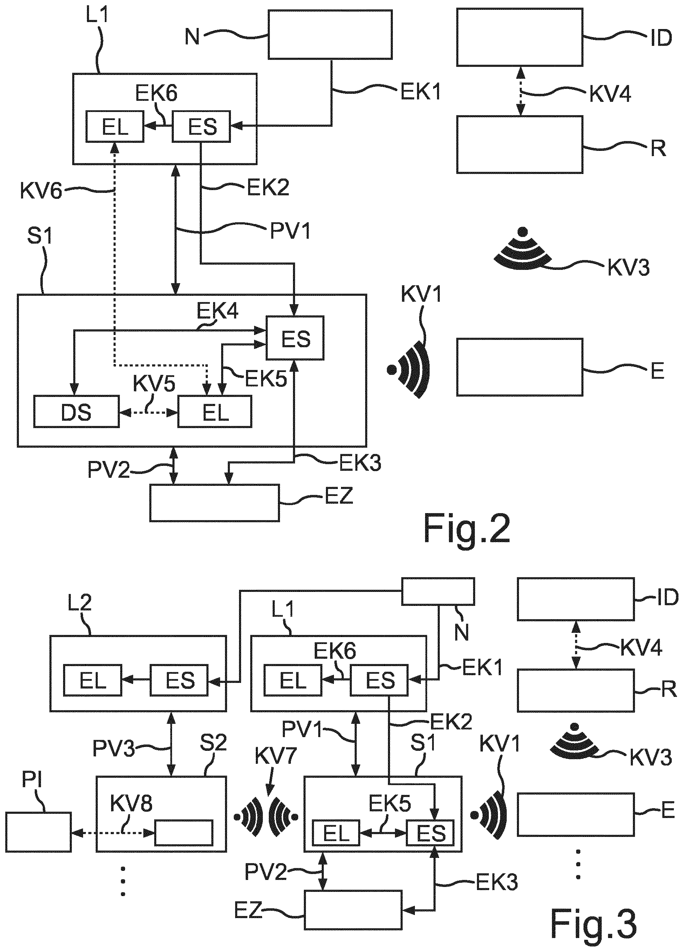

Eine zweite Variante des Beleuchtungssystems ist in Fig. 2 schematisch wiedergegeben. Diejenigen Komponenten, die sich auch in dem Beispiel von Fig. 1 finden, sind dort ausführlich beschrieben. Abweichend von dem Beispiel von Fig. 1 besitzt die Sendeeinrichtung S1 in dem Beispiel von Fig. 2 explizit einen Datenspeicher DS. Dieser Datenspeicher DS befindet sich in oder an der Sendeeinrichtung S1, d.h. in oder an einem Gehäuse der Sendeeinrichtung S1. Er wird über einen Energieübertragungskanal EK4 von der Energieschnittstelle ES der Sendeeinrichtung S1 mit Energie versorgt. Außerdem besitzt die Sendeeinrichtung S1 eine Informationsverarbeitungseinheit bzw. Elektronik EL, die ebenfalls von der Energieschnittstelle ES der Sendeeinrichtung S1 über einen Energieübertragungskanal EK5 mit Energie versorgt wird. Der Datenspeicher DS steht mit der Elektronikeinheit EL in Kommunikationsverbindung KV5. Über diese Kommunikationsverbindung KV5 können bidirektional Daten übertragen werden. Darüber hinaus besitzt auch das Leuchtmittel L1 eine Elektronikeinheit EL. Diese wird über einen Energieübertragungskanal EK6 von der Energieschnittstelle ES des Leuchtmittels L1 mit Energie versorgt. Die Elektronikeinheit EL des Leuchtmittels L1 steht mit der Elektronikeinheit EL der Sendeeinrichtung S1 in Kommunikationsverbindung KV6.

Auf dem Datenspeicher können Betriebsdaten, d.h. Leuchtmitteldaten, des Leuchtmittels L1 temporär gespeichert werden. Auf Anforderungen, beispielsweise durch das Endgerät E (z. B. Smart-Device) an die Sendeeinrichtung S1 werden die Leuchtmitteldaten über die drahtlose Kommunikationsschnittstelle KV1 (z. B. BLE-Verbindung) an das Endgerät E übermittelt. Wenn darüber hinaus eine Kommunikationsverbindung KV6 zwischen dem Leuchtmittel (z. B. auf dem elektronischen Vorschaltgerät) und der Sendeeinrichtung S1 besteht, können über diese Verbindung auch beispielsweise Fehlercodes der Lichtinstallation bzw. des Leuchtmittels L1 an das Endgerät E übermittelt werden.

Gemäß einer dritten Variante ist ein interner Datenspeicher in/an oder als Teil des Leuchtmittels L1 vorgesehen. Auf diesem Datenspeicher werden die Betriebsdaten des Leuchtmittels, d.h. die Leuchtmitteldaten, vorzugsweise temporär gespeichert. Auf Anforderungen beispielsweise durch das Endgerät E (z. B. Smart-Device) an die Sendeeinrichtung S1 werden die Informationen über die drahtlose Kommunikationsschnittstelle KV1 an das Endgerät E übermittelt. Voraussetzung ist eine Kommunikationsverbindung zwischen dem in dem Leuchtmittel L1 (z. B. auf dem elektronischen Vorschaltgerät) integrierten Datenspeicher und der Sendeeinrichtung S1.

Eine vierte Variante eines erfindungsgemäßen Beleuchtungssystems ist in Fig. 3 schematische dargestellt. Diejenigen Komponenten aus den vorangehenden Ausführungsbeispielen, die auch in diesem Beispiel vorgesehen sind, werden nachfolgend nicht näher beschrieben. Diesbezüglich wird auf die Beschreibung der Fig. 1 und 2 verwiesen.

In dem System von Fig. 3 ist neben dem ersten Leuchtmittel L1 mindestens ein zweites Leuchtmittel L2 vorgesehen. Auch dieses zweite Leuchtmittel L2 besitzt eine Elektronikeinheit EL und eine Energieschnittstelle ES. Die Elektronikeinheit EL wird über einen Energieübertragungskanal EK7 von der Energieschnittstelle ES, welche ihrerseits über einen Energieübertragungskanal EK7 von dem Versorgungsnetz N Energie erhält, mit Energie versorgt. Ebenso ist dem zweiten Leuchtmittel L2 eine zweite Sendeeinrichtung S2 über eine physische Verbindung PV3 zugeordnet. Dies bedeutet, dass sich die Sendeeinrichtung S2 in oder an dem zweiten Leuchtmittel L2 befindet oder Teil davon ist.

Die Energieversorgung der zweiten Sendeeinrichtung S2, die wiederum auch Empfangsfunktionalität besitzen und als Bake realisiert sein kann, ist in Fig. 3 der Übersichtlichkeit halber nicht näher verdeutlicht. Sie kann aber wie in dem Fall der ersten Sendeeinrichtung S1 realisiert sein.

Zwischen der ersten Sendeeinrichtung S1 und der zweiten Sendeeinrichtung S2 ist eine Kommunikationsverbindung KV7 aufgebaut. Dabei handelt es sich vorzugsweise um eine drahtlose Kommunikationsverbindung, z. B. eine BLE-Verbindung.

In dem Beleuchtungssystem können mehrere derartige Sendeeinrichtungen S1, S2 etc. mit paarweiser Kommunikationsverbindung vorgesehen sein. Damit kann ein sogenanntes vermaschtes Netz (Mash-Netzwerk) zwischen den Sendeeinrichtungen realisiert werden. Ortungs- und Betriebsdaten können so zwischen den Leuchtmitteln bzw. ihren Sendeeinrichtungen ausgetauscht werden.

Mindestens ein Teilnehmer des Netzwerks (im Beispiel von Fig. 3 die Sendeeinrichtung S2, die dem zweiten Leuchtmittel L2 zugeordnet ist) verfügt über mindestens eine zusätzliche drahtlose oder drahtgebundene Kommunikationsschnittstelle KS zu einer peripheren Infrastruktur (z. B. Diensteserver, Cloud) über eine Kommunikationsverbindung KV8. Damit können die Betriebsdaten der mehreren Leuchtmittel nicht nur mit dem Endgerät E abgegriffen werden, sondern gegebenenfalls auch von der peripheren Infrastruktur PI.

Entsprechend einer fünften Variante kann eine Kombination aus der ersten Variante und der vierten Variante vorgesehen sein. Dabei wird ein Mash-Netzwerk zwischen mehreren Sendeeinrichtungen aufgebaut, wobei die die Leuchtmittel betreffenden Informationen übermittelt werden. An mindestens einer Position des Service-Areals ist zusätzlich ein ortsfestes Endgerät vorgesehen, an welches von einer Sendeeinrichtung in der unmittelbaren Umgebung die relevanten Daten übermittelt werden. Das Endgerät E ist entsprechend der ersten Variante ausgeprägt.

Mit den obigen Varianten können mehrere Aufgaben realisiert werden. So können beispielsweise typische Schaltzyklen der Anwendung bzw. der Leuchtmittel oder des Beleuchtungssystems ermittelt werden, um beispielsweise Hinweise auf Energieeinsparpotenziale geben zu können. Darüber hinaus können aber auch Betriebszeiten der Anwendung/der Lichtinstallation beispielsweise im Hinblick auf einen notwendigen Austausch von Leuchtmitteln (Betriebsstundenzähler) ermittelt werden. Außerdem kann mit den oben geschilderten Beleuchtungssystemen eine Identifikation von Arealen ermöglicht werden, in denen das Licht häufig ausgeschaltet ist. Schließlich kann auch eine Aufzeichnung von Daten erfolgen, um in Garantiefällen eine mögliche Fehlnutzung nachweisen zu können. In besonders vorteilhafter Weise können hierzu beispielsweise über eine intelligente Schnittstelle zum elektronischen Vorschaltgerät (ECG) der Lichtinstallation/der Leuchte bzw. des Leuchtmittels weitere Daten (Leuchtmitteldaten) aus dem Vorschaltgerät übertragen werden (Fehlercodes usw.), z. B. im Rahmen eines Ausleseprozesses.

## Patentansprüche

1. Leuchtvorrichtung mit
- einem Leuchtmittel (L1),
- einer Sendeeinrichtung (S1), die in oder an dem Leuchtmittel (L1) angeordnet ist, zum drahtlosen Senden eines Ortungssignals an ein gegenüber der Leuchtvorrichtung externes Endgerät (E),
- einer Datenverarbeitungseinrichtung, die in oder an dem Leuchtmittel (L1) angeordnet ist, zum Gewinnen von Leuchtmitteldaten über das Leuchtmittel (L1) und zum Bereitstellen dieser Daten für die Sendeeinrichtung (S1), wobei
- die Sendeeinrichtung (S1) dazu ausgebildet ist, neben dem Ortungssignal auch die Leuchtmitteldaten an das externe Endgerät (E) zu senden, und mit
- einer Energieversorgungseinrichtung zur gemeinsamen Energieversorgung für das Leuchtmittel (L1) und die Sendeeinrichtung (S1), wobei die Energieversorgungseinrichtung einen Energie-Zwischenspeicher (EZ) ausschließlich zur Versorgung der Sendeeinrichtung (S1) aufweist,
**gekennzeichnet dadurch, dass**
- die Leuchtvorrichtung ferner eine Energieerfassungseinrichtung zum Erfassen einer Energieversorgung der Sendeeinrichtung (S1) aufweist, wobei die Leuchtmitteldaten eine Information von der Energieerfassungseinrichtung darüber enthalten, ob die Sendeeinrichtung (S1) zu einem vorgegebenen Zeitpunkt von dem Energie-Zwischenspeicher (EZ) mit Energie versorgt wird, oder nicht.

2. Leuchtvorrichtung nach einem der vorhergehenden Ansprüche, wobei die Sendeeinrichtung (S1) als Bake ausgebildet ist.

3. Leuchtvorrichtung nach einem der vorhergehenden Ansprüche, wobei die Sendeeinrichtung (S1) als drahtlose Kommunikationseinrichtung ausgebildet ist, mit der auch Daten für die Datenverarbeitungseinrichtung empfangbar sind.

4. Leuchtvorrichtung nach einem der vorhergehenden Ansprüche, die eine Zeiterfassungseinrichtung aufweist, wobei die Leuchtmitteldaten eine Information von der Zeiterfassungseinrichtung darüber enthalten, wann das Leuchtmittel (L1) eingeschaltet und/oder ausgeschaltet war.

5. Leuchtvorrichtung nach einem der vorhergehenden Ansprüche, die eine Ladezustandserfassungseinrichtung zum Erfassen eines Ladezustands des Energie-Zwischenspeichers (EZ) aufweist, wobei die Leuchtmitteldaten eine Information von der Ladezustandserfassungseinrichtung über einen aktuellen Ladezustand des Energie-Zwischenspeichers (EZ) enthalten.

6. Leuchtvorrichtung nach einem der vorhergehenden Ansprüche, die eine Fehlererfassungseinrichtung zum Erfassen eines Fehlers betreffend das Leuchtmittel (L1) aufweist, wobei die Leuchtmitteldaten einen Fehlercode der Fehlererfassungseinrichtung enthalten.

7. Leuchtvorrichtung nach einem der vorhergehenden Ansprüche, die eine Sensoreinrichtung zum Erfassen einer Größe aus einer Umgebung oder von der Leuchtvorrichtung aufweist, wobei die Leuchtmitteldaten entsprechende Umgebungsdaten der Sensoreinrichtung enthalten.

8. Beleuchtungssystem mit mindestens einer Leuchtvorrichtung nach einem der vorhergehenden Ansprüche und dem Endgerät (E), wobei das Endgerät (E) eine separate Kommunikationsschnittstelle (KS) zu einer von der Leuchtvorrichtung verschiedenen Datenverarbeitungsvorrichtung (PI) aufweist.

9. Beleuchtungssystem nach Anspruch 8 mit mehreren Leuchtvorrichtungen gemäß den Ansprüchen 1 bis 7, wobei die Sendeeinrichtung (S1) jeder Leuchtvorrichtung als Kommunikationseinrichtung mit Sende- und Empfangsfunktion ausgebildet ist, und zwischen den Kommunikationseinrichtungen der Leuchtvorrichtungen ein vermaschtes Netz aufgebaut ist.

10. Verfahren zum Betreiben einer Leuchtvorrichtung mit einem Leuchtmittel (L1), einer Sendeeinrichtung (S1), die in oder an dem Leuchtmittel (L1) angeordnet ist, durch
- drahtloses Senden eines Ortungssignals von der Sendeeinrichtung (S1) an ein gegenüber der Leuchtvorrichtung externes Endgerät (E),
- Gewinnen von Leuchtmitteldaten über das Leuchtmittel (L1),
- Senden der Leuchtmitteldaten neben dem Ortungssignal von der Sendeeinrichtung (S1) an das externe Endgerät (E), und
- Versorgen des Leuchtmittels und der Sendeeinrichtung mit Energie mittels einer Energieversorgungseinrichtung zur gemeinsamen Energieversorgung für das Leuchtmittel (L1) und die Sendeeinrichtung (S1), wobei die Energieversorgungseinrichtung einen Energie-Zwischenspeicher (EZ) ausschließlich zur Versorgung der Sendeeinrichtung (S1) aufweist,
**gekennzeichnet durch**
- Erfassen einer Energieversorgung der Sendeeinrichtung (S1) mithilfe einer Energieerfassungseinrichtung, wobei die Leuchtmitteldaten eine Information von der Energieerfassungseinrichtung darüber enthalten, ob die Sendeeinrichtung (S1) zu einem vorgegebenen Zeitpunkt von dem Energie-Zwischenspeicher (EZ) mit Energie versorgt wird, oder nicht.

## Claims

1. A lighting device comprising
- an illuminant (L1),
- a transmitting device (S1), which is arranged in or at the illuminant (L1), for wirelessly transmitting a locating signal to a terminal (E) external with respect to the lighting device,
- a data processing device, which is arranged in or at the illuminant (L1), for obtaining illuminant data about the illuminant (L1) and for providing this data to the transmitting device (S1), wherein
- the transmitting device (S1) is formed to also transmit the illuminant data to the external terminal (E) besides the locating signal, and comprising
- an energy supply device for common energy supply for the illuminant (L1) and the transmitting device (S1), wherein the energy supply device comprises an energy buffer (EZ) exclusively for supply of the transmitting device (S1),
**characterized in that**
- the lighting device further comprises an energy detecting device for detecting an energy supply of the transmitting device (S1), wherein the illuminant data contains information from the energy detecting device as to whether or not the transmitting device (S1) is supplied with energy from the energy buffer (EZ) at a preset point of time.

2. The lighting device according to any one of the preceding claims, wherein the transmitting device (S1) is formed as a beacon.

3. The lighting device according to any one of the preceding claims, wherein the transmitting device (S1) is formed as a wireless communication device, by which data for the data processing device can also be received.

4. The lighting device according to any one of the preceding claims, which comprises a time registration device, wherein the illuminant data contains information from the time registration device about when the illuminant (L1) was switched on and/or switched off.

5. The lighting device according to any one of the preceding claims, which comprises a state of charge detecting device for detecting a state of charge of the energy buffer (EZ), wherein the illuminant data contains information from the state of charge detecting device about a current state of charge of the energy buffer (EZ).

6. The lighting device according to any one of the preceding claims, which comprises an error detecting device for detecting an error concerning the illuminant (L1), wherein the illuminant data contains an error code of the error detecting device.

7. The lighting device according to any one of the preceding claims, which comprises a sensor device for detecting a quantity from an environment or from the lighting device, wherein the illuminant data contains corresponding environmental data of the sensor device.

8. An illumination system with at least one lighting device according to any one of the preceding claims and the terminal (E), wherein the terminal (E) comprises a separate communication interface (KS) to a data processing device (PI) different from the lighting device.

9. The illumination system according to claim 8 with multiple lighting devices according to claims 1 to 7, wherein the transmitting device (S1) of each lighting device is formed as a communication device with transmitting and receiving function, and an intermeshed network is established between the communication devices of the lighting devices.

10. A method for operating a lighting device with an illuminant (L1), a transmitting device (S1), which is arranged in or at the illuminant (L1), by
- wirelessly transmitting a locating signal from the transmitting device (S1) to a terminal (E) external with respect to the lighting device,
- obtaining illuminant data about the illuminant (L1),
- transmitting the illuminant data besides the locating signal from the transmitting device (S1) to the external terminal (E), and
- supplying the illuminant and the transmitting device with energy by means of an energy supply device for common energy supply for the illuminant (L1) and the transmitting device (S1), wherein the energy supply device comprises an energy buffer (EZ) exclusively for supplying the transmitting device (S1),
**characterized by**
- detecting an energy supply of the transmitting device (S1) with the aid of an energy detecting device, wherein the illuminant data contains information from the energy detecting device as to whether or not the transmitting device (S1) is supplied with energy from the energy buffer (EZ) at a preset point of time.

## Revendications

1. Arrangement lumineux, comprenant
- un moyen lumineux (L1),
- un dispositif d'émission (S1), qui est disposé dans ou sur le moyen lumineux (L1), servant à l'émission sans fil d'un signal de localisation à un terminal (E) externe par rapport à l'arrangement lumineux,
- un dispositif de traitement de données, qui est disposé dans ou sur le moyen lumineux (L1), destiné à obtenir des données de moyen lumineux à propos du moyen lumineux (L1) et à mettre ces données à disposition pour le dispositif d'émission (S1),
- le dispositif d'émission (S1) étant configuré pour émettre également les données de moyen lumineux au terminal (E) externe en plus du signal de localisation, et comprenant
- un dispositif d'alimentation en énergie destiné à l'alimentation en énergie commune du moyen lumineux (L1) et du dispositif d'émission (S1), le dispositif d'alimentation en énergie possédant un accumulateur d'énergie intermédiaire (EZ) exclusivement destiné à l'alimentation du dispositif d'émission (S1), **caractérisé en ce que**
- l'arrangement lumineux possède en outre un dispositif de détection d'énergie destiné à détecter une alimentation en énergie du dispositif d'émission (S1), les données de moyen lumineux contenant une information du dispositif de détection d'énergie à propos du fait que le dispositif d'émission (S1) est, à un instant prédéfini, alimenté en énergie ou non par l'accumulateur d'énergie intermédiaire (EZ).

2. Arrangement lumineux selon l'une des revendications précédentes, le dispositif d'émission (S1) étant réalisé sous la forme d'une balise.

3. Arrangement lumineux selon l'une des revendications précédentes, le dispositif d'émission (S1) étant réalisé sous la forme d'un dispositif de communication sans fil avec lequel peuvent également être reçues des données pour le dispositif de traitement de données.

4. Arrangement lumineux selon l'une des revendications précédentes, lequel possède un dispositif d'acquisition du temps, les données de moyen lumineux contenant une information à propos du moment auquel le moyen lumineux (L1) est allumé et/ou éteint.

5. Arrangement lumineux selon l'une des revendications précédentes, lequel possède un dispositif de détection d'état de charge destiné à détecter un état de charge de l'accumulateur d'énergie intermédiaire (EZ), les données de moyen lumineux contenant une information du dispositif de détection d'état de charge à propos d'un état de charge actuel de l'accumulateur d'énergie intermédiaire (EZ).

6. Arrangement lumineux selon l'une des revendications précédentes, lequel possède un dispositif de détection de défaut destiné à détecter un défaut concernant le moyen lumineux (L1), les données de moyen lumineux contenant un code de défaut du dispositif de détection de défaut.

7. Arrangement lumineux selon l'une des revendications précédentes, lequel possède un dispositif capteur destiné à détecter une grandeur à partir d'un environnement ou de l'arrangement lumineux, les données de moyen lumineux contenant des données d'environnement correspondantes du dispositif capteur.

8. Système d'éclairage comprenant au moins un arrangement lumineux selon l'une des revendications précédentes et un terminal (E), le terminal (E) possédant une interface de communication (KS) séparée vers un arrangement de traitement de données (PI) différent de l'arrangement lumineux.

9. Système d'éclairage selon la revendication 8, comprenant plusieurs arrangements lumineux selon l'une des revendications 1 à 7, le dispositif d'émission (S1) de chaque arrangement lumineux étant réalisé sous la forme d'un dispositif de communication avec fonction d'émission et de réception, et un réseau maillé étant établi entre les dispositifs de communication des arrangements lumineux.

10. Procédé pour faire fonctionner un arrangement lumineux, comprenant un moyen lumineux (L1), un dispositif d'émission (S1), qui est disposé dans ou sur le moyen lumineux (L1), par
- émission sans fil d'un signal de localisation du dispositif d'émission (S1) à un terminal (E) externe par rapport à l'arrangement lumineux,
- obtention de données de moyen lumineux à propos du moyen lumineux (L1),
- émission des données de moyen lumineux au terminal (E) externe en plus du signal de localisation du dispositif d'émission (S1), et
- alimentation du moyen lumineux et du dispositif d'émission en énergie au moyen d'un dispositif d'alimentation en énergie destiné à l'alimentation en énergie commune du moyen lumineux (L1) et du dispositif d'émission (S1), le dispositif d'alimentation en énergie possédant un accumulateur d'énergie intermédiaire (EZ) exclusivement destiné à l'alimentation du dispositif d'émission (S1),
**caractérisé par**
- détection d'une alimentation en énergie du dispositif d'émission (S1) à l'aide d'un dispositif de détection d'énergie, les données de moyen lumineux contenant une information du dispositif de détection d'énergie à propos du fait que le dispositif d'émission (S1) est, à un instant prédéfini, alimenté en énergie ou non par l'accumulateur d'énergie intermédiaire (EZ).
